# EUROPÄISCHE PATENTANMELDUNG

(11) **EP 1 025 977 A1**
(43) Veröffentlichungstag der Anmeldung: **09.08.2000**
(21) Anmeldenummer: 99101622.1
(22) Anmeldetag: 03.02.1999
(51) Int. Cl.: B29C 51/42, B29C 35/00

(54) **Tiefziehmaschine für Thermoplastbecher**

(71) Anmelder: Eggers, Thies, D-51789 Lindlar (DE)
(72) Erfinder: Eggers, Thies, D-51789 Lindlar (DE)
(74) Vertreter: Hassler, Werner, Dr.

(57) **Zusammenfassung**

Eine Tiefziehstation in einer Tiefziehmaschine für Thermoplastbecher, die mit einer taktweise arbeitenden Transportstrecke ausgestattet ist, die eine Becherfolienbahn von einer Abwickelstation übernimmt, wobei die Transportstrecke durch eine Heizstation, die Tiefziehstation und weitere Bearbeitungsstationen verläuft. Das Technische Problem ist eine einwandfreie und schnelle Kühlung der Thermoplastbecher in der Ziehstation, um die Taktzeit möglichst klein zu Halm, und eine Anpassung des Tiefziehwerkzeugs an unterschiedliche Höhen der Thermoplastbecher. Das Unterwerkzeug (7) der Tiefziehstation (6) ist aus einen Plattenstapel bildenden Zwischenplatten (32) aufgebaut, wobei in die Oberfläche der Zwischenplatten (32) Rinnen (35) zur Bildung von Kühlkanälen innerhalb des Plattenstapels eingearbeitet sind.

## Beschreibung

Die Erfindung betrifft eine Tiefzichstation in einer Tiefziehmaschine für Thermoplastbecher, dic mit einer taktweise arbeitenden Transportstrecke ausgestattet ist, die eine Becherfolienbahn von einer Abwickelstation übernimmt, wobei die Transportstrecke durch eine Heizstation, die Tiefziehstation und weitere Bearbeitungsstationen verläuft.

Anwendungsgebiet der Erfindung ist die variable Herstellung von Thermoplastbechern aus einer Folie. Die Thermoplastbecher nehmen Lebensmittelzubereitungen wie Quark oder andere Milchprodukte, Pudding, Konfitüre, Getränke oder dergleichen auf.

Die DE 3234506 C2 beschreibt eine Tiefziehmaschine der genannten Gattung. Das Unterwerkzeug der Tiefziehstation ist mit durchgehenden Kühlkanälen versehen. Eine solche Ausbildung ist jedoch nicht möglich, wenn die Formkammern für die Thermoplastbecher gegeneinander versetzt sind.

Die DE 39 40 346 C1 zeigt die Anordnung der Kühlkanäle innerhalb der Tiefziehstation, wonach die Kühlkanäle nicht nur im Boden, sondern auch in den Stegen zwischen den einzelnen Formmulden verlaufen.

Die DE 44 18 064 C1 zeigt eine mehrteilige Ausbildung des Unterwerkzeugs der Tiefziehstation. In eine äußere Stützkonstruktion sind Formmulden eingesetzt, wobei zwischen Stützkonstruktion und Formmulde ein Kühlmittelkanal frei bleibt.

Die US 21 91 303 beschreibt ein sandwichartig aufgebautes Werkzeug zum Kühlen von erhitzten Kunststoffverpackungsfolien. Dabei sind abwechselnd Platten und mit eingefrästen Kühlmittelkanälen versehene Stangen aufeinander gestapelt. So erhält man eine in genau definierter Weise durchströmte Kühlplatte.

Aufgabe der Erfindung ist eine einwandfreie und schnelle Kühlung der Thermoplastbechet in der Ziehstation, um die Taktzeit möglichst klein zu halten, und eineAnpassung des Tiefziehwerkzeugs an unterschiedliche Höhen der Thermoplastbecher.

Diese Aufgabe wird nach der Erfindung dadurch gelöst, daß das Unterwerkzeug der Tiefziehstation aus einen Plattenstapel bildenden Zwischenplatten aufgebaut ist, wobei in die Oberfläche der Platten Rinnen zur Bildung von Kühlkanälen innerhalb des Plattenstapels eingearbeitet sind.

Die Erfindung unterscheidet sich insofern vom Stand der Technik, als der Autbau des Unterwerkzeugs aus Zwischenplatten eine feine Abstufung an unterschiedliche Höhen erlaubt. Durch Fräsen von Rillen in jeder Zwischenplatte kann man Kühlkanäle in großer Anzahl und gewünschter Form bereitstellen, so daß eine schnelle Kühlung sichergestellt ist. Dieses ergibt eine kurze Taktzeit.

Eine wirkungsvolle Kühlung der tiefgezogenen Thermoplastbecher wird dadurch erreicht, daß die Kühlkanäle in jeder Platte mäanderförmig von einer Längsseite zur gegenüberliegenden Längsseite verlaufen.

Ein Ausführungsbeispiel wird anhand der Zeichnungen erläutert, in denen darstellen:
Fig. 1 eine schematische Gesamtansicht der Maschine,
Fig. 2 einen Schnitt durch das Unterwerkzeug der Tiefziehstation und
Fig. 3 eine Draufsicht auf eine Platte des Unterwerkzeugs nach Fig. 2.

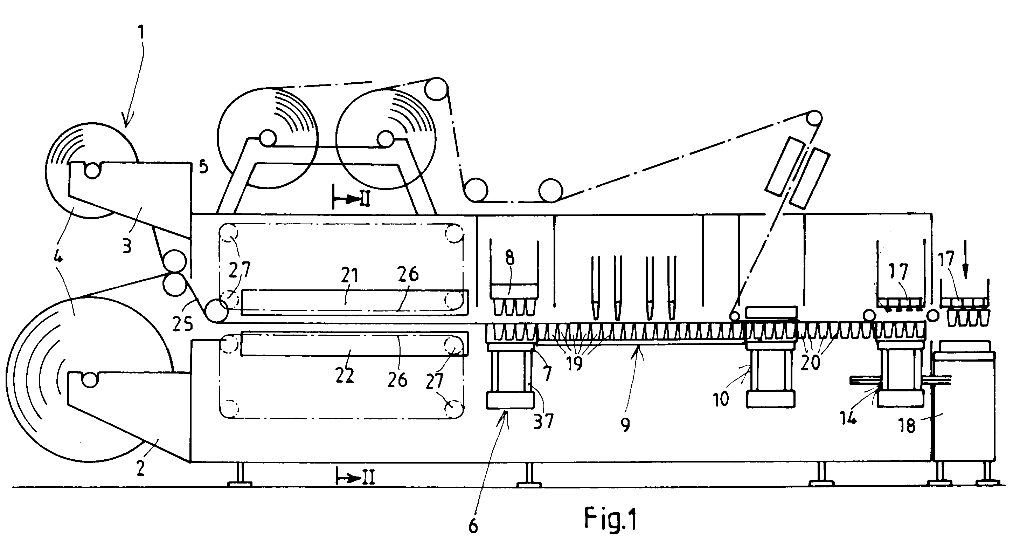

Fig. 1 ist eine schematische Gesamtansicht der Tiefziehmaschine in Verbindung mit einer Abfüllmaschine. Diese umfaßt folgende wesentliche Stationen für die Bearbeitung der Thermoplasthecher:
eine Wechselabwickelstation 1 mit zwei Abwickelaufnahmen 2, 3 für zwei Wickel 4 von Thermoplastfolien 25, die wechselweise abgewickelt werden:
eine durchgehende Transportstrecke mit Transportwalzen, Haltern und Greifern, die nicht in Einzelheiten dargestellt sind. Die Transportstrecke ist für eine taktweise bzw. partieweise Bewegung der Thermoplastfolie und der Thermoplastbecher eingerichtet;
eine Heizstation 5 zum Aufheizen der Thermoplastfolie 25 auf die Tiefziehtemperatur;
eine Tiefziehstation 6 mit einem Unterwerkzeug 7 und einem Oberwerkzeug 8 in Form von Tiefziehstempeln zur Formung der Thermoplastbecher 19;
eine Füllstation 9 zum Befüllen der Thermoplastbecher 19;
eine Siegelstation 10 zur Heißsiegelung einer Deckelfolie auf die gefüllten Thermoplastbecher;
eine Stanzstation 14 zur Trennung und Vereinzelung der gesiegelten Thermoplastbecher 20 mit einem Austraggreifer 17, der die getrennten Thermoplastbecher 20 aufnimmt und in
eine Packstation 18 befördert, wo die getrennten Thermoplastbecher 20 in Steigen, Kartons, Paletten oder andere Trasnportbehälter eingebracht werden. Die anschließenden Stationen für die Endverpakkung sind nicht dargestellt.

Fig. 1 zeigt eine online-Maschine. In anderer Weise können die Thermoplastbecher im Anschluß an die Tiefziehstation 6 auch zwischengestapelt und gesondert gefüllt und weiterverarbeitet werden.

Nach Fig 1 umfaßt die Heizstation eine obere und eine untere Heizvorrichtung 21, 22 die über mehrere Taktlängen der Transportstrecke reichen und als Infrarotstrahlungsheizer ausgebildet sind. Die Infrarotstrahlerheizung ermöglicht eine Erhitzung der Thermoplastfolie auf eine hohe Temperatur, um Bakterien und Keime abzutöten. Die Heizstation ist außerdem in Transportrichtung verstellbar. Damit ist eine Anpassung an unterschiedliche Formate der Thermoplastbecher und der Becherpartien möglich.

Schließlich sind zwischen den Heizvorrichtungen 21, 22 und der Thermoplastfolie 25 Rollvorhänge 26 angeordnet, die über Rollen 27 laufen. Diese Rollvorhänge 26 werden beim Anfahren der Maschine taktweise bewegt und geben nacheinander entsprechend den Vorschubtakten die Heizvorrichtungen 21, 22 frei, damit die Thermoplastfolienpartien individuell vorgeheizt werden. Die Temperaturführung und Verstellung der Rollvorhänge 26 ist mit der Tiefziehstation gekoppelt, damit immer eine gleichbleibendende vorsgeschriebene Temperatur der Thermoplastfolie für das Tiefziehen gewährleistet ist.

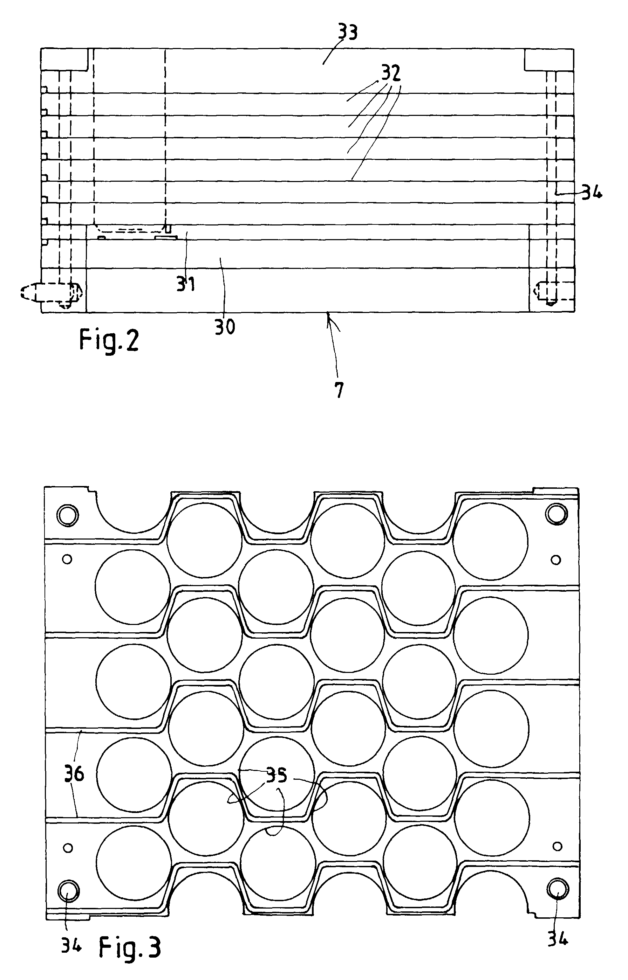

Die Fig. 2 und 3 zeigen Einzelheiten des Unterwerkzeugs 7 der Tielziehstation 6. Das Unterwerkzeug 7 setzt sich aus einer Aufspannplatte 30, einer Grundplatte 31, mehreren Zwischenplatten 32 und einer Kopfplatte 33 zusammen, die in üblicher Weise durch Bolzen oder Stifte 34 zusammengespannt sind. Eine Zwischenplatte 32 ist in Fig. 3 in der Draufsicht gezeigt. Die Zwischenplatte 32 enthält Formkammern 35 zur Formung der Thermoplastbecher 19 und außerdem in die Oberfläche eingearbeitete mänderförmig um die Formkammern 35 verlaufende Rinnen 36, die Kühlkanäle bilden oder in die Kühlrohre eingelegt sind. Die Zwischenplatten 32 sind austauschbar, damit das Unterwerkzeug 7 durch eine entsprechende Anzahl von Zwischenplatten 32 an unterschiedliche Becherhöhen angepaßt werden kann.

Für andere Becherformate und Becherpartien muß man das Tiefziehwerkzeug austauschen. Die entsprechenden Längenänderungen in Vorschubrichtung werden durch die bereits genannte Verstellung der Heizvorrichtung ausgeglichen.

Das Unterwerkzeug 7 ist auf einem Hubtisch 37 angeordnet. Das Oberwerkzeug 8 mit den Formkernen für die Thermoplastbecher ist pressenartig bewegbar. Das Unterwerkzeug 7 wird mit einer der gewünschten Höhe der Thermoplastbecher entsprechenden Anzahl von Zwinschenplatten 32 bestückt. Im Zuge des getakteten partieweisen Vorschubs wird ein Stück aufgeheizter Thermoplastfolie 25 in die Ziehstation 6 eingefahren. Das Unterwerkzeug 7 wird nach oben gefahren, das Oberwerkzeug 8 nach unten, so daß die Formkerne in die Formkammern 35 eintreten und die Thermoplastbecher formen. Die Thermoplastbecher 19 werden unmittelbar bei der Formung gekühlt. Die geformten Thermoplastbecher werden dann in der Füllstation gefüllt und danach weiter verarbeitet.

## Patentansprüche

1. Tiefziehstation in einer Tiefziehmaschine für Thermoplastbecher, die mit einer taktweise arbeitenden Transportstrecke ausgestattet ist, die eine Becherfolienbahn von einer Abwickelstation übernimmt. wobei die Transportstrecke durch eine Heizstation, die Tiefziehstation und weitere Bearbeitungsstationen verläuft, dadurch gekennzeichnet, daß das Unterwerkzeug (7) der Tiefziehstation (6) aus einen Plattenstapel bildenden Zwischenplatten (32) aufgebaut ist, wobei in die Oberfläche der Zwischenplatten (32) Rinnen (35) zur Bildung von Kühlkanälen (36) innerhalb des Plattenstapels eingearbeitet sind.

2. Tiefziehstation nach Anspruch 1, dadurch gekennzeichnet, daß die Kühlkanäle (36) Kühlrohre aufnehmen.

3. Tiefziehstation nach Anspruch 1 oder 2, dadurch gekennzeichnet, daß die Kühlkanäle (36) in jeder Zwischenplatte (32) mäanderförmig von einer Längsseite zur gegenüberliegenden Längsseite verlaufen.
